# EUROPÄISCHE PATENTSCHRIFT

(11) **EP 1 322 250 B1**
(45) Veröffentlichungstag und Bekanntmachung des Hinweises auf die Patenterteilung: **24.08.2005**
(21) Anmeldenummer: 02740695.8
(22) Anmeldetag: 07.06.2002
(51) Int. Cl.: A61C 9/00

(54) **ZAHNÄRZTLICHER ABFORMLÖFFEL**
DENTAL IMPRESSION TRAY
PORTE-EMPREINTE DENTAIRE

(30) Priorität: 13.06.2001 DE 10128719
(43) Veröffentlichungstag der Anmeldung: 02.07.2003
(73) Patentinhaber: Ernst Mühlbauer GmbH & Co.KG, 25870 Norderfriedrichskoog (DE)
(72) Erfinder: DETJE, Bernd, 22761 Hamburg (DE)
(74) Vertreter: Glawe, Delfs, Moll
(86) Internationale Anmeldenummer: PCT/EP2002/006267
(87) Internationale Veröffentlichungsnummer: WO 2002/100291

(56) Entgegenhaltungen:
- DE-A- 4 116 190
- DE-A- 19 608 546
- US-A- 2 311 158
- US-A- 5 718 577

## Beschreibung

Zum Abformen von Zähnen für die Herstellung von Zahnersatz verwendet man aus dem pastösen Zustand erstarrende Abformmassen. Um die Abformmasse beim Abformen im Bereich der abzuformenden Zähne zu halten, verwendet man Abformlöffel. Diese bestehen aus einem Boden und wenigstens zwei Seitenwänden, die gemeinsam den Abformbereich einschließen, in welchen die Abformmasse eingebracht wird, um, von dem Löffel gehalten, an die Abformstelle gebracht zu werden. Die Wände, von denen eine lingual/palatinal und die andere buccal von den abzuformenden Zähnen zu liegen kommt, sollen dafür sorgen, daß die Masse nicht abfließen kann, sondern seitlich der abzuformenden Zähne gehalten wird. Es ist bekannt (DE-A-196 08 546), in dem Löffel ein Zuführungsrohr für die Masse vorzusehen, das mit einer Reihe über die Länge des Löffels verteilter Austrittsöffnungen versehen ist.

Beim Abformen dringen die abzuformenden Zähne durch Schließen des Gebisses in die Abformmasse ein. Dies gelingt nicht, wenn der Patient auf eine der beiden Wände beißt und die abzuformenden Zähne demzufolge nicht in den Zwischenraum zwischen den Wänden eindringen. Diese Gefahr ist bei bekannten Abformlöffeln *(US-A-2 311 158)* gegeben, *bei denen beide Wände* aus starrem Werkstoff wie Metall oder Kunststoff bestehen. Wenn man nach einem bekannten Vorschlag (DE-C-31 04 721) die Masse gänzlich in einem flexiblen Schlauch einschließt, verhindert das zwischen der Masse und den Zähnen befindliche Schlauchmaterial einen sauberen Abdruck.
Ferner gehört zum nicht vorveröffentlichten Stand der Technik der Vorschlag, feste Wände dadurch zu vermeiden, daß die Wände von aufblasbaren Schlauchelementen gebildet sind.
Zum Füllen der Schlauchelemente kann Druckluft, Wasser oder auch Abformmasse verwendet werden. Jedoch hat sich gezeigt, daß die Abformmasse mangels Formstabilität solcher Abformlöffel nicht sicher gehalten wird und beispielsweise über die Wände hinweg fließt. Das Abformmaterial erreicht dann nicht die gewünschte Höhe, und die Abformung gelingt nicht vollständig.

Diese Nachteile vermeidet die Erfindung durch die Merkmale des Anspruchs 1. Vorzugsweise ist die steif ausgebildete oder ausgerüstete Wand die lingual/palatinal gelegene. Jedoch kann dafür statt dessen oder zusätzlich auch die buccale steif ausgerüstet sein. Der Boden des Löffels wird von flexiblem Material gebildet. Außer der Vermeidung der Nachteile des Standes der Technik erreicht man dadurch, daß der Löffel auf geringstem Raum gepackt und auf einfache Weise verwendungsbereit gemacht werden kann.

Die durch Füllen sich aufrichtende Wand umfaßt mindestens ein Schlauchelement, dessen Innenraum mit einer Füllöffnung in Verbindung steht. Diese Füllöffnung kann beispielsweise an ein Spendegerät für Abformmasse angeschlossen werden. Das Schlauchelement wird zur Benutzung des Löffels mit der Abformmasse gefüllt und gelangt dadurch in den prallen, hinreichend formbeständigen Zustand.

Sobald der Abformlöffel diesen Zustand erreicht hat, kann sein Abformbereich in herkömmlicher Weise mit der erforderlichen Menge der Abformmasse versehen werden, indem er beispielsweise unter die Düse eines geeigneten Spendegeräts gehalten wird. Vorteilhafter ist es gemäß der Erfindung, wenn das mit der Abformmasse zu füllende Schlauchelement wenigstens eine zum Abformbereich des Löffels gerichtete Ausströmöffnung aufweist. Nachdem das Schlauchelement gefüllt worden ist, dringt die Abformmasse durch diese Öffnung in den Abformbereich des Löffels und füllt diesen schließlich. Zweckmäßigerweise ist eine Reihe solcher Ausströmöffnungen über die Länge des Abformbereich des Löffels verteilt, damit sich eine gleichmäßige Füllung ergibt. Wenn das Schlauchelement lediglich an einer Seite des Löffels angeordnet ist, ist es auf seiner dem Abformbereich zugewendeten Seite mit diesen Ausströmöffnungen versehen. Um eine vollständige und hinreichend aussteifende Füllung des Schlauchelements zu erreichen, kann es aber zweckmäßiger sein, dies an der der Füllungöffnung abgelegenen Schmalseite des Löffels um diesen herum zu führen und ggf. sogar auf der anderen Seite zurück zu führen. Dabei soll zwischen der Füllöffnung und der Ausströmöffnung die im wesentlichen volle Länge der betreffenden Wand liegen, damit sie aufgrund des Druckfalls in der Ausströmöffnung oder den Ausströmöffnungen prall wird, bevor das Material in den Abformbereich überströmen kann. Wenn das Schlauchelement im Bereich der steif ausgerüsteten Wand in Richtung zu dem mit der Füllöffnung versehenen Ende des Löffels zurückgeführt ist, werden die Ausströmöffnungen zweckmäßigerweise auf der Seite der steif ausgerüsteten Wand angeordnet.

Die Masse soll beim Ausströmen aus dem Schlauchelement in den Abformbereich des Löffels einen gewissen Widerstand vorfinden, der dafür sorgt, daß innerhalb des Schlauchelements zumindest während des Füllvorgangs ein gewisser Überdruck herrscht, der die Prallheit und Steifigkeit des Schlauchelements garantiert. Bewährt haben sich schlitzförmige Ausströmöffnungen, wobei diese vorzugsweise in Querrichtung (bezogen auf die Richtung des Schlauchelements) verlaufen. Nach einem anderen Merkmal der Erfindung können die Ausströmöffnungen in den Abformbereich des Löffels vorragende Mündungen oder Kanäle oder Stutzen bilden. Zum einen garantiert dies eine besonders gleichmäßige Füllung des Abformbereichs, zum anderen wird dadurch auch die erwünschte Druckdifferenz hergestellt. Schließlich ist es nach der Erfindung möglich, die Ausströmöffnung(en) mit einem Berstverschluß, beispielsweise einer Berstmembran, zu versehen. Der Berstverschluß öffnet sich erst dann, wenn im Schlauchelement ein vorbestimmter Überdruck erreicht ist, so daß seine Prallheit auf diese Weise gesichert wird.

Es empfiehlt sich, für eine vollständige Füllung des Schlauchelements mit Abformmasse zu sorgen, was eine Entlüftung voraussetzt. Soweit Ausströmöffnungen zum Abformbereich des Löffels vorhanden sind, geschieht die Entlüftung durch diese Abströmöffnungen. Blind endende Schlauchelemente sollten mit einer besonderen Entlüftungsöffnung vorgesehen sein, die zweckmäßigerweise so ausgebildet ist, daß sie den Ausdruck von Abformmasse verhindert. Dies kann beispielsweise dadurch geschehen, daß die Entlüftungsöffnung sehr klein ist oder mit einem entsprechenden Ventil versehen ist.

Die Füllöffnung wird zweckmäßigerweise passend zum Anschluß an ein Ausgabegerät für Abformmasse ausgebildet. Wenn die Spendedüse dieses Geräts konisch endet, kann beispielsweise ein die Füllöffnung bildendes Schlauchende auf das konische Düsenende aufgeschoben werden. Es kann auch eine formschlüssige Kupplung, beispielsweise mit einem Bajonettverschluß und Dichtflächen, vorgesehen werden. Während der Handhabung des Löffels sollte der Austritt von Abformmasse aus der Füllöffnung verhindert werden. Dies kann durch ein selbstschließendes Ventil, beispielsweise analog der Ausbildung des Füllventils sogenannter Ventilsäcke, erreicht werden. Es kann auch ein besonderer Verschlußclip vorgesehen sein, der von außen auf den die Füllöffnungen bildenden Schlauchteil aufgesetzt wird, um ihn zusammenzukneifen. Oder es kann ein Stopfen eingesetzt werden. Wenn er hinreichend formstabil mit dem Schlauchteil verbunden ist, kann er nach der Erfindung mit einem Griff versehen werden, an dem der gesamte Löffel gehandhabt werden kann.

Die Erfindung wird im folgenden näher unter Bezugnahme auf die Zeichnung erläutert, die vorteilhafte Ausführungsbeispiele veranschaulicht. Es zeigen:
- Fig. 1: die perspektivische Ansicht einer ersten Ausführungsform,
- Fig. 2: einen Querschnitt durch die erste Ausführungsform,
- Fig. 3: die perspektivische Darstellung einer zweiten Ausführungsform,
- Fig. 4: einen Querschnitt durch die zweite Ausführungsform und
- Fig. 5: eine dritte Ausführungsform

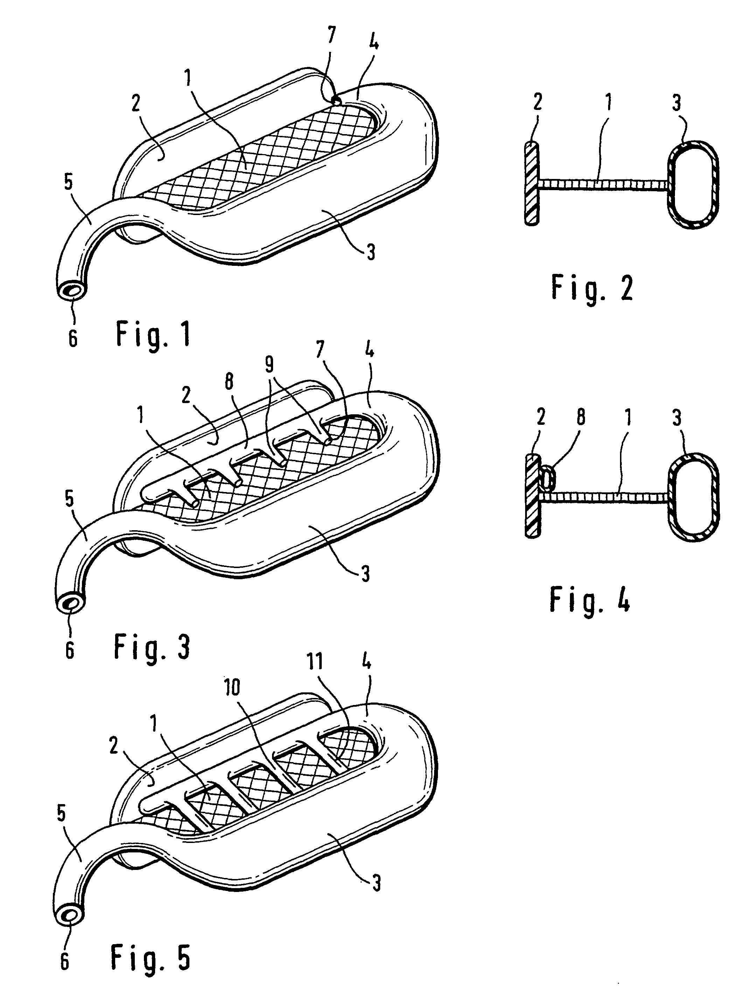

Der Abformlöffel gemäß Fig. 1 und 2 umfaßt einen Boden 1, der beispielsweise von einer flexiblen Folie oder einem Gewebestück gebildet sein kann. Auf der lingualen/palatinalen Seite ist die Platte 1 von einer Wand 2 begrenzt, die von einem steifen Bauteil gebildet ist. Sie ist im wesentlichen plattenförmig ausgebildet. Sie bildet eine den Löffel aussteifende Längsrippe. Unter steif ist in diesem Zusammenhang eine Festigkeit zu verstehen, die unter den vorhandenen Kräfteverhältnissen eine hinreichende Formbeständigkeit dieser Wand ermöglicht. Geeignete Werkstoffe sind Polyethylen, Polyvinylchlorid, Karton oder dergleichen.

Die Begrenzung des Bodens 1 auf der buccalen Seite wird von einem Schlauchelement 3 gebildet. Das Schlauchelement 3 verläuft über die gesamte Länge des Bodens 1 und umschließt auch seinen hinteren Rand 4. Es endet im Anschluß an den Wandteil 2. Der Schlauchabschnitt 4 sichert die seitliche Ausspannung des Löffels zwischen der Wand 2 und dem Schlauchelement 3, wenn der Boden 1 zu flexibel ist, um diese Aufgabe erfüllen zu können.

Am vorderen Ende steht das Schlauchelement 3 mit einem Füllschlauch 5 in Verbindung, dessen Ende 6 die Füllöffnung bildet. Der Schlauch 5 kann mit der Öffnung 6 über das konische Ende einer Fülldüse geschoben werden.

Am Ende des Schlauchelements 3 bzw. des Schlauchstücks 4 ist eine Öffnung 7 vorgesehen, die zu dem von dem Boden 1 gebildeten Abformbereich des Löffels weist. Sie ist entweder so klein, daß keine wesentlichen Mengen von Abformmasse herausdringen und dient dann lediglich der Entlüftung. Oder sie ist so groß, daß die Abformmasse in der Menge, wie sie für den Abdruck benötigt wird, herausströmen und den Abformbereich füllen kann.

Statt dessen könnte das Schlauchelement 3 auch mit einer Mehrzahl von Abströmöffnungen über seine Länge versehen sein, die zu der Oberseite des Bodens 1 hinzeigen, um die erforderliche Menge an Abformmasse dem Abformbereich gleichmäßig zuzuführen.

Das Ausführungsbeispiel gemäß Fig. 3 und 4 gleicht dem zuvor beschriebenen hinsichtlich des Bodens 1, der Wand 2, dem Schlauchelement 3 und dem Füllschlauch 5. An das hintere Ende des Schlauchelements 3 schließt sich ebenfalls ein Schlauchstück 4 an, das die Aussteifung der hinteren Schmalseite der Vorrichtung bewirkt. Daran schließt sich ein Schlauchelement 8 an, das die Wand 2 auf deren Innenseite bis zum vorderen Ende hin begleitet und eine Mehrzahl von Ausströmöffnungen 7 aufweist, die in Form von vorragenden Mündungen oder Stutzen in den Abformbereich ragen und eine gleichmäßige Versorgung dieses Bereichs mit Abformmasse ermöglichen.

Der Füllschlauch 5, das Schlauchelement 3, das Schlauchstück 4 und das Schlauchelement 8 können einstückig hergestellt sein, wobei die unterschiedlichen Durchmesser durch unterschiedliche Dehnung erzeugt werden.

Bei der dritten Ausführungsform gemäß Fig. 5 sind die vorragenden Mündungen 9 gemäß dem zuvor beschriebenen Ausführungsbeispiel verlängert in Form von Kanälen 10, die in gleichmäßiger Verteilung sich quer über den Boden 1 erstrecken. Sie enthalten Öffnungsschlitze 11, von denen die Zeichnung einen je Kanal 10 andeutet. Es versteht sich, daß auch mehrere derartige Öffnungen über die Fläche des Bodens 1 verteilt sein können. Bei schlitzförmiger Ausführung der Öffnung 11 werden diese zweckmäßigerweise quer zum Längsverlauf der sie enthaltenden Kanäle angeordnet.

## Patentansprüche

1. Zahnärztlicher Abformlöffel mit einem Boden (1) und mindestens zwei diesen begrenzenden Wänden (2, 3), von denen eine (2) in ihrer Gesamtheit steif ausgebildet ist und eine steife Längsrippe bildet, **dadurch gekennzeichnet, dass** die andere Wand (3) durch ein füllbares Schlauchelement (3) aus flexiblem Material gebildet ist, um im prallen Zustand die für den Gebrauch des Löffels gewünschte Gestalt anzunehmen, und dass der Boden (1) aus flexiblem Material besteht.

2. Löffel nach Anspruch 1, **dadurch gekennzeichnet, daß** die steif ausgerüstete Wand (2) die lingual gelegene ist.

3. Löffel nach einem der Ansprüche 1 bis 2, **dadurch gekennzeichnet, daß** die füllbare Wand mindestens ein Schlauchelement (3) umfaßt, dessen Innenraum mit einer Füllöffnung (6) in Verbindung steht.

4. Löffel nach Anspruch 3, **dadurch gekennzeichnet, daß** der Innenraum des Schlauchelements (3) mit mindestens einer zum Abformbereich des Löffels gerichteten Ausströmöffnung (7) in Verbindung steht.

5. Löffel nach Anspruch 4, **dadurch gekennzeichnet, daß** eine Reihe von Ausströmöffnungen (9, 11) über die Länge des Abformbereichs des Löffels verteilt ist.

6. Löffel nach Anspruch 5, **dadurch gekennzeichnet, daß** das Schlauchelement (8) im Bereich der steif ausgerüsteten Wand (2) in Richtung zu dem mit der FülLöffnung (6) versehenen Ende des Löffels zurückgeführt ist.

7. Löffel nach Anspruch 5, **dadurch gekennzeichnet, daß** die Ausströmöffnungen (11) als Schlitze ausgebildet sind.

8. Löffel nach Anspruch 5, **dadurch gekennzeichnet, daß** die Ausströmöffnungen in den Abformbereich des Löffels vorragende Mündungen (9) bilden.

9. Löffel nach einem der Ansprüche 4 bis 8, **dadurch gekennzeichnet, daß** die Ausströmöffnung(en) mit einem Berstverschluß versehen ist (sind).

10. Löffel nach einem der Ansprüche 1 bis 9, **dadurch gekennzeichnet, daß** er einen blind endenden Schlauchteil (4) mit Entlüftungsöffnung (7) aufweist.

11. Löffel nach Anspruch 10, **dadurch gekennzeichnet, daß** die Entlüftungsöffnung (7) als ein den Austritt von Abdruckmasse verhinderndes Ventil ausgebildet ist.

12. Löffel nach einem der Ansprüche 1 bis 11, **dadurch gekennzeichnet, daß** die Füllöffnung (6) zum Anschluß an ein Ausgabegerät für Abdruckmasse passend ausgebildet ist.

13. Löffel nach Anspruch 12, **dadurch gekennzeichnet, daß** die Füllöffnung (6) oder der Füllschlauch (5) mit einer Verschlußeinrichtung versehen ist.

14. Löffel nach Anspruch 13, **dadurch gekennzeichnet, daß** die Verschlußeinrichtung ein selbstschließendes Ventil ist.

15. Löffel nach Anspruch 13, **dadurch gekennzeichnet, daß** die Verschlußeinrichtung ein Verschlußclip ist.

16. Löffel nach Anspruch 13, **dadurch gekennzeichnet, daß** die Verschlußeinrichtung mit einem Griff für den Löffel ausgerüstet ist.

## Claims

1. A dental impression tray with a base (1) and at least two walls (2, 3) delimiting said base (1), one of the walls (2) being stiff in its entirely and forming a longitudinal rib, **characterized in that** the other wall (3) is formed by a tube element (3) formed of flexible material which can be filled in order to assume, in the taut state, the desired shape for use of the tray and that the base (1) consists of flexible material.

2. The tray as claimed in claim 1, **characterized in that** the rigid wall (2) is the wall located on the lingual side.

3. The tray as claimed in one of claims 1 through 2, **characterized in that** the fillable wall comprises at least one tube element (3) whose interior communicates with a filling opening (6).

4. The tray as claimed in claim 3, **characterized in that** the interior of the tube element (3) communicates with at least one outflow opening (7) directed toward the impression area of the tray.

5. The tray as claimed in claim 4, **characterized in that** a row of outflow openings (9, 11) is distributed along the length of the impression area of the tray.

6. The tray as claimed in claim 5, **characterized in that** the tube element (8) in the area of the rigid wall (2) is routed back in the direction toward that end of the tray provided with the filling opening (6).

7. The tray as claimed in claim 5, **characterized in that** the outflow openings (11) are designed as slits.

8. The tray as claimed in claim 5, **characterized in that** the outflow openings form mouths (9) projecting into the impression area of the tray.

9. The tray as claimed in one of claims 4 through 8, **characterized in that** the outflow opening(s) is (are) provided with a burstable seal.

10. The tray as claimed in one of claims 1 through 9, **characterized in that** it has a tube part (4) with a blind end and with a vent hole (7).

11. The tray as claimed in claim 10, **characterized in that** the vent hole (7) is designed as a valve obstructing the outflow of impression compound.

12. The tray as claimed in one of claims 1 through 11, **characterized in that** the filling opening (6) is designed for fitted attachment to a dispensing appliance for impression compound.

13. The tray as claimed in claim 12, **characterized in that** the filling opening (6) or the filling tube (5) is provided with a closure device.

14. The tray as claimed in claim 13, **characterized in that** the closure device is a self-closing valve.

15. The tray as claimed in claim 13, **characterized in that** the closure device is a closure clip.

16. The tray as claimed in claim 13, **characterized in that** the closure device is equipped with a grip for the tray.

## Revendications

1. Porte-empreinte dentaire avec un fond (1) et au moins deux parois (2, 3) délimitant celui-ci, dont l'une (2) est rigide dans sa totalité et forme une nervure longitudinale rigide, **caractérisé en ce que** l'autre paroi (3) est formée par un élément de tuyau remplissable (3) en une matière flexible, pour prendre à l'état tendu la forme souhaitée pour l'utilisation du porte-empreinte, et **en ce que** le fond (1) est constitué d'une matière flexible.

2. Porte-empreinte selon la revendication 1, **caractérisé en ce que** la paroi rigide (2) est celle qui est placée du côté de la langue.

3. Porte-empreinte selon l'une quelconque des revendications 1 et 2, **caractérisé en ce que** la paroi remplissable comprend au moins un élément de tuyau (3), dont le volume intérieur est en communication avec un orifice de remplissage (6).

4. Porte-empreinte selon la revendication 3, **caractérisé en ce que** le volume intérieur de l'élément de tuyau (3) est en communication avec au moins un orifice de sortie (7) orienté vers la région de moulage du porte-empreinte.

5. Porte-empreinte selon la revendication 4, **caractérisé en ce qu'**une série d'orifices de sortie (9, 11) est répartie sur la longueur de la région de moulage du porte-empreinte.

6. Porte-empreinte selon la revendication 5, **caractérisé en ce que** l'élément de tuyau (8) est ramené en arrière dans la région de la paroi rigide (2), en direction de l'extrémité du porte-empreinte pourvue de l'orifice de remplissage (6).

7. Porte-empreinte selon la revendication 5, **caractérisé en ce que** les orifices de sortie (11) sont en forme de fentes.

8. Porte-empreinte selon la revendication 5, **caractérisé en ce que** les orifices de sortie forment des embouchures (9) pénétrant dans la région de moulage du porte-empreinte.

9. Porte-empreinte selon l'une quelconque des revendications 4 à 8, **caractérisé en ce que** l'orifice/les orifices de sortie est/sont pourvus(s) d'une fermeture anti-éclatement.

10. Porte-empreinte selon l'une quelconque des revendications 1 à 9, **caractérisé en ce qu'**il présente une partie de tuyau (4) se terminant en aveugle, avec un orifice d'évacuation d'air (7).

11. Porte-empreinte selon la revendication 10, **caractérisé en ce que** l'orifice d'évacuation d'air (7) a la forme d'une soupape empêchant la sortie de masse de prise d'empreinte.

12. Porte-empreinte selon l'une quelconque des revendications 1 à 11, **caractérisé en ce que** l'orifice de remplissage (6) est formé de façon à se raccorder ajustement à un appareil de distribution de masse de prise d'empreinte.

13. Porte-empreinte selon la revendication 12, **caractérisé en ce que** l'orifice de remplissage (6), ou le tuyau de remplissage (5), est pourvu d'un dispositif de fermeture.

14. Porte-empreinte selon la revendication 13, **caractérisé en ce que** le dispositif de fermeture est une soupape à fermeture automatique.

15. Porte-empreinte selon la revendication 13, **caractérisé en ce que** le dispositif de fermeture est une pince de fermeture.

16. Porte-empreinte selon la revendication 13, **caractérisé en ce que** le dispositif de fermeture est équipé d'une poignée pour le porte-empreinte.
